# EUROPEAN PATENT APPLICATION

(11) **EP 4 325 022 A1**
(43) Date of publication of application: **21.02.2024**
(21) Application number: 21944603.6
(22) Date of filing: 11.06.2021
(51) Int. Cl.: E06B 9/52, E06B 7/28, E06B 3/46, E05D 13/00, E05D 15/06, G09F 9/00, F16G 13/16

(54) **SCREEN GUIDE FRAME STRUCTURE AND SCREEN DEVICE HAVING SAME**

(71) Applicant: Taroko Door & Window Technologies, Inc., Gaoxiong, Taiwan 83160 (TW)
(72) Inventor: ZHANG, Zhiyuan, Gaoxiong, Taiwan 83160 (CN)
(74) Representative: Tahtadjiev, Konstantin
(86) International application number: PCT/CN2021/099596
(87) International publication number: WO 2022/257094

(57) **Abstract**

A screen guide frame structure and a screen device having same. The present invention mainly comprises providing a passage (33) on the screen guide frame structure. When a screen (4) is stored or unfolded, the passage (33) can allow one end of a windproof hook (45) to slide therein; moreover, since the other end of the windproof hook (45) is hooked onto a net line (44) of the screen (4), the screen device cannot be blown away from the outside of a guide frame (3) when there are strong winds.

## Description

### CROSS-REFERENCE TO RELATED APPLICATION

This application is a national stage entry of International Application No. PCT/CN2021/099596, filed on June 11, 2021, which claims priority to Chinese Invention Patent Application No. 202110652410.4, filed on June 11, 2021. The aforesaid applications are incorporated by reference herein in their entirety.

### FIELD

The disclosure relates to a screen device, and more particularly to a screen guide frame and a screen device in which the aforesaid screen guide frame is applied.

### BACKGROUND

Currently, many buildings are mounted with screens to prevent outdoor mosquitoes or other insects from getting indoors. In recent years, hidden screens have been widely used due to advantages such as convenient storage and no obstruction to the view through building openings.

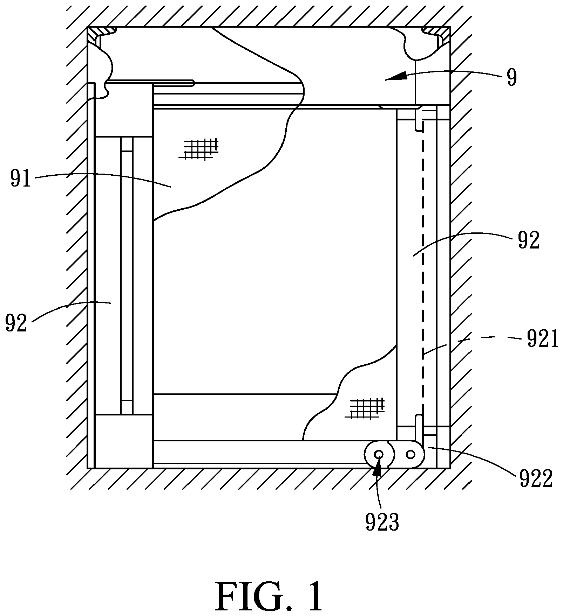

As shown in Figure 1, a conventional hidden screen (9) includes a screen (91) and two frames (92), wherein the screen (91) moves between being stored and being unfolded between the two frames (92), the frames (92) have a receiving groove (921), and one end of the frames (92) is provided with a guide block (922). When the screen (91) is stored, the guide block (922) can lead a guide frame (923) to enter and be stored in the receiving groove (921) of the frames (92), as shown by a dotted line in Figure 1. When the screen (91) is unfolded, the guide frame (923) is pulled out of the frames (92) through the guide block (922), and positioned across a bottom of the screen (91), in order to prevent outdoor mosquitoes or other insects from getting indoors through the bottom of the screen (91). However, there is no securing structure between the screen (91) and the guide frame (923). Therefore, when strong wind acts on the screen (91), the bottom of the screen (91) may be easily blown out of the guide frame (923), creating a gap between the screen (91) and the guide frame (923); the mosquitoes, other insects or dusts outside may get indoors through the gap, which greatly decreases the effect of the conventional hidden screen (9) of blocking outdoor mosquitoes or other insects from getting indoors.

### SUMMARY

The technical scheme adopted by this invention is a screen guide frame structure, which includes a plurality of pivot moving members, wherein the pivot moving members are pivotally connected in series to form a guide frame, each of the pivot moving members has at least an extended piece extended therefrom, and a front edge of the extended piece is abutted against another pivot moving member.

A screen guide frame structure includes: a plurality of pivot moving members, wherein the pivot moving members are pivotally connected in series to form a guide frame, and at least one elastic pushing device is disposed between two adjacent ones of the pivot moving members of the guide frame.

A screen guide frame structure includes: a plurality of pivot moving members, wherein the pivot moving members are pivotally connected in series to form a guide frame, one end of the guide frame is provided with a guide line securing member, the guide line securing member is provided with at least one threaded hole and an engaging protrusion, the engaging protrusion is provided with a pierced hole at a position that corresponds to the threaded hole, and a threaded securing component passes through the pierced hole of the engaging protrusion and is threadedly secured in the threaded hole of the guide line securing member.

The beneficial effect of the invention is: that a main purpose of the invention is to provide a screen guide frame structure, which is to provide a passage on a guide frame. When the screen is stored or unfolded, the passage can not only allow one end of a windproof hook to slide therein but since the other end of the windproof hook is hooked onto a net line of the screen, the screen device is also prevented from being blown away from the outside of the guide frame when there are strong winds.

### BRIEF DESCRIPTION OF THE DRAWINGS

Figure 1 is a schematic diagram of a conventional screen.

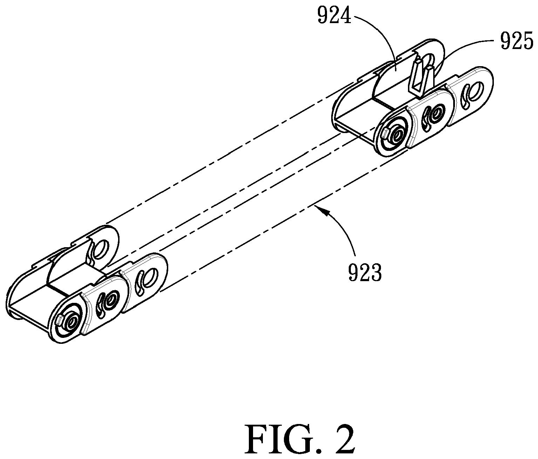

Figure 2 is a perspective schematic diagram of a guide frame and a stopper thereof in the conventional screen.
Figure 3 is a schematic diagram of a first preferred embodiment of the invention.
Figure 4 is a schematic diagram of a first guide block of the first preferred embodiment of the invention.
Figure 5 is a schematic diagram of a second frame and a second guide block of the first preferred embodiment of the invention.
Figure 6 is a schematic diagram of a guide frame of the first preferred embodiment of the invention.
Figure 7 is one of schematic diagrams of a pivot moving member of the first preferred embodiment of the invention.
Figure 8 is another schematic diagram of the pivot moving member of the first preferred embodiment of the invention.
Figure 9 is a schematic diagram of the pivot moving member being provided with a windproof hook and disposed on a track of the first preferred embodiment of the invention.
Figure 10 is a schematic diagram of a guide line securing member of the first preferred embodiment of the invention.
Figure 11 is a schematic diagram of a net line controlling member of the first preferred embodiment of the invention.
Figure 12 is a schematic diagram of a second preferred embodiment of the invention.
Figure 13 is a schematic diagram of a third preferred embodiment of the invention.
Figure 14 is a schematic diagram of an intermediate member connected to the guide frame of the third preferred embodiment of the invention.

### DETAILED DESCRIPTION

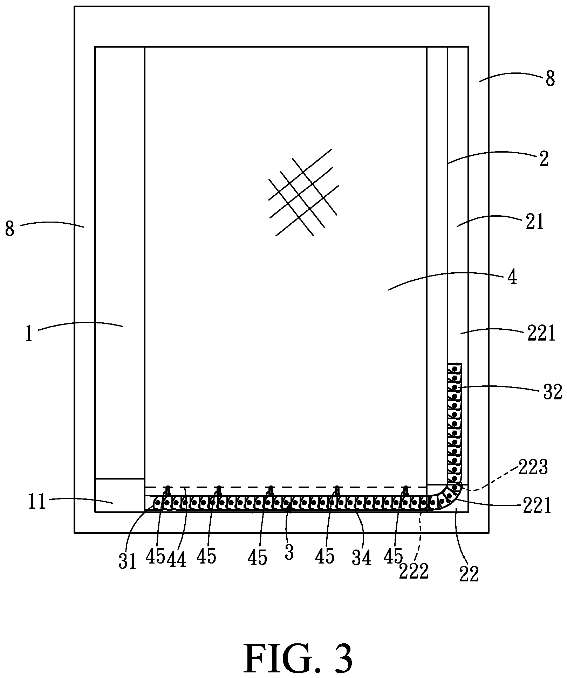

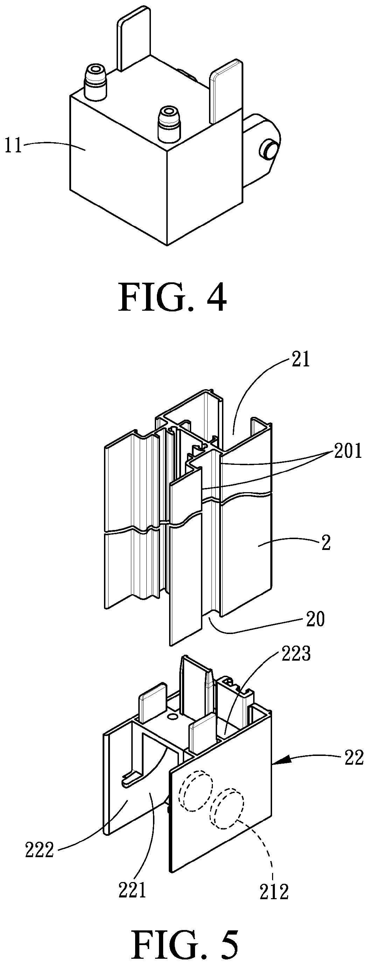

Referring to Figures 3 to 5, a first preferred embodiment of a screen device of the invention includes a first frame (1), a second frame (2), at least a guide frame (3) and a screen (4); wherein the first frame (1) is to be secured on an outer frame (8), and the outer frame (8) may be one of an outer frame of a window or a door or an outer frame of a screen window or a screen door, and the outer frame (8) is one of square-shaped, inverted U-shaped or C-shaped. As shown in Figure 4, at least one end of the first frame (1) is provided with a first guide block (11), and the second frame (2) is slidable in the outer frame (8). As shown in Figure 5, the second frame (2) is provided with a receiving groove (21), and at least one end of the second frame (2) is provided with a second guide block (22) that communicates with the receiving groove (21); and the second guide block (22) has a curved slide (221) therein and the curved slide (221) has two exits (222), (223). One of the exits (222) is for the guide frame (3) to enter the second guide block (22) from the outside, and the other one of the exits (223) is for the guide frame (3) to enter the receiving groove (21) of the second frame (2), and the guide frame (3) has at least two end portions (31), (32). As shown in Figure 3, one of the end portions (31) and the first guide block (11) form a link, and the other end portion (32) of the guide frame (3) enters or exits the receiving groove (21) of the second frame (2) through the curved slide (221) of the second guide block (22). Furthermore, two opposite sides of the screen (4) are respectively secured to the first frame (1) and the second frame (2), and the screen (4) is a cloth-shaped body, a mesh-shaped body, a film-shaped body, a connecting-plate-shaped body, or a combination of at least two of the foregoing materials. The screen (4) may be pleated or flat, wherein the pleated screen (4) can shrink when repeatedly folded. The screen (4) is passed through by a net line (44), one end of the net line (44) is secured on the first frame (1), and the other end extends into the receiving groove (21) of the second frame (2) and is secured to the end portion (32) of the guide frame (3). In addition, the net line (44) has a plurality of windproof hooks (45) hooked thereon.

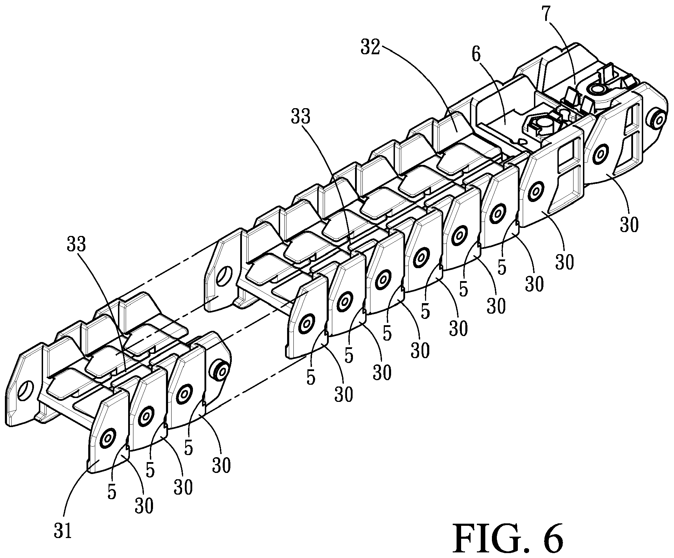

Referring to Figures 6 to 9, the guide frame (3) includes a plurality of pivot moving members (30), and the guide frame (3) is formed by the pivot moving members (30) pivotally connected in series. Each of the pivot moving members (30) is provided with a shifting slot (311) thereon, and the shifting slots (311) form an interconnected passage (33) in the guide frame (3). Each of the pivot moving members (30) is provided with at least one extended piece (312) towards one side of the passage (33). In this embodiment, the pivot moving members (30) are provided with the extended pieces (312) towards both sides of the passage (33) and front edges of the two extended pieces (312) are just abutted against another pivot moving member (30), which, when the pivot moving members (30) pivot and bend, not only creates no gaps between the pivot moving members (30) with the fitting of the extended pieces (312), but also prevents situations where the net line (44) which extends into the receiving groove (21) of the second frame (2) gets stuck between the pivot moving members (30) and creates inconveniences of unfolding or storing the screen (4). Each pivot moving member (30) is provided with a recessed space (313) on at least one slot side of the shifting slot (311). In the embodiment, it is preferable to provide the recessed spaces (313) on two opposite slot sides of the shifting slot (311). Since the width between the two recessed spaces (313) is greater than that of the passage (33), a bigger bottom base (451) of the windproof hook (45) can slide in the two recessed spaces (313) when the windproof hook (45) is inserted into the passage (33). Therefore, when wind acts on the screen (4), a side of the screen (4) that is nearby the guide frame (3) has no possibility of being blown out of the guide frame (3) because of the net line (44) and because the bottom base (451) of the windproof hook (45) is inserted in the recessed space (313) of the guide frame (3). A track (34) is provided on a sliding route of the guide frame (3). The track (34) is provided with at least one protruding rail (341), and both sides of the protruding rail (341) are each provided with a groove (342). The guide frame (3) slides on the protruding rail (341) of the track (34), and the pivot moving members (30) of the guide frame (3) are each provided with an engaging ledge (314) at a position corresponding to each groove (342) of the track (34), so that when the guide frame (3) slides on the track (34), each engaging ledge (414) of the pivot moving members (30) of the guide frame (3) just engages the groove (342) of the track (34), preventing any risk of the guide frame (3) derailing out of the track (34) when sliding on the track (34) or retreating into the second frame (2). Referring to Figure 6, the second frame (2) also slides on the track (34), and the second guide block (22) of the second frame (2) is provided with at least one roller (212) at a position corresponding to the track (34). The roller (212) enables the second frame (2) to slide on the track (34) more smoothly and with less effort.

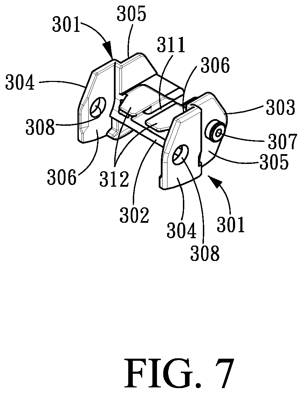

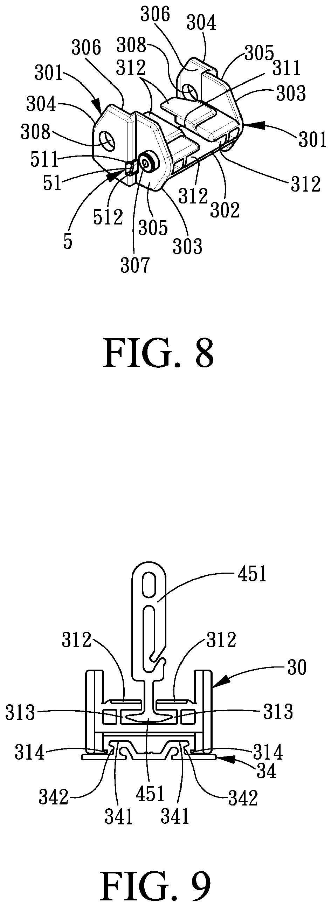

Referring to Figures 7 and 8, every pivot moving member (30) further includes at least one sidewall part (301) and a bridging part (302). In the embodiment, the pivot moving member (30) includes two of the sidewall parts (301) and the bridging part (302) disposed between these two sidewall parts (301). The sidewall part (301) has at least a first section (303) and a second section (304), wherein one side of the first section (303) is provided with a first recessed part (305), and another side of the second section (304) is provided with a second recessed part (306). The second recessed part (306) is for the first section (303) of an adjacent one of the pivot moving members (30) to pivot thereon, and the first recessed part (305) is for the second section (304) of another adjacent one of the pivot moving members (30) to pivot thereon. In the embodiment, the first recessed part (305) is provided with a pivot protruding shaft (307) and the second recessed part (306) is provided with a pivot hole (308). The pivot protruding shaft (307) and the pivot hole (308) pivot with the pivot protruding shaft (307) and the pivot hole (308) of adjacent pivot moving members (30), so as to make a connection in series to form the guide frame (3) which is shaped like a long strip. Furthermore, the pivot hole (308) may also be disposed on the first recessed part (305) (not shown), and the pivot protruding shaft (307) may also be disposed on the second recessed part (306); the foregoing configuration also allows the pivot moving members (30) to be pivotally connected in series to form the guide frame (3), and is an equivalent replacement. Moreover, a bottom edge of the sidewall part (301) is in the shape of an arc. With such a structural design, when the guide frame (3) bends and goes in and out of the second guide block (22), the arc-shaped bottom edge of the sidewall part (301) can fit on the curved slide (221), which increases smoothness of the guide frame (3) bending and going in and out of the second guide block (22) and reduces noise of the guide frame (3) sliding in the second guide block (22).

Referring to Figures 6 and 8, at least an elastic pushing device (5) is disposed between the first recessed part (305) of the sidewall (301) of the guide frame (3) and the second section (304) of an adjacent pivot moving member (30), and the elastic pushing device (5) at least has an elastic member (51), and the elastic member (51) includes a root part (511) and a free end (512); wherein the root part (511) is disposed on the sidewall part (301) and the free end (512) is abutted against the second section (304) of an adjacent pivot moving member (30), so that when the guide frame (3) transforms from a bent state to a straight state, with the provision of the elastic member (51), a cushioning force against and noises attributed to contact collisions of the pivot moving members (30) can be decreased by provision of the elastic member (51).

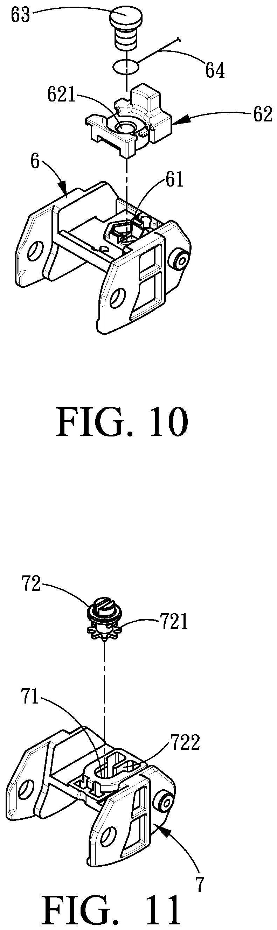

Referring to Figures 6 and 10, the end portion (32) of the guide frame (3), which enters the receiving groove (21) of the second frame (2), is provided sequentially with a guide line securing member (6) and a net line controlling member (7) that are pivotally connected thereto; wherein the guide line securing member (6) is provided with at least one threaded hole (61) and an engaging protrusion (62) thereon, and the engaging protrusion (62) has a pierced hole (621) corresponding to the threaded hole (61). A threaded securing component (63) (such as a screw, etc.), to which one end of a guide line (64) is attached, passes through the pierced hole (621) of the engaging protrusion (62) and is threadedly secured in the threaded hole (61) of the guide line securing member (6), thereby securing the engaging protrusion (62) and the end of the guide line (64) on the guide line securing member (6). When unfolding the screen (4), the engaging protrusion (62) is secured to the outside of the exit (223) of the curved slide (221) of the second guide block (22); thus, the end portion (32) of the guide frame (3) has no risk of being pulled out of the second guide frame (22). As stated above, one end of the guide line (64) is secured on the guide line securing member (6), and the other end of the guide line (64) is secured on the outer frame (8) after extending through an opening at one end of the receiving groove (21) of the second frame (2). Accordingly, by the provision of the guide line (64), when the second frame (2) brings the screen (4) to unfold or be stored, the guide frame (3) can provide optimal straight-line motion. Moreover, in the embodiment, since the engaging protrusion (62) is detachable from the guide line securing member (6), when the guide frame (3) is to be dismantled, replaced or repaired, the engaging protrusion (62) may be detached first to pull the guide frame (3) out from the second guide block (22), and then, two sides of the screen (4) are detached respectively from the first frame (1) and the second frame (2) in order to dismantle the embodiment. Therefore, the design of the engaging protrusion (62) being detachable from the guide line securing member (6) allows the embodiment to have many advantages such as being convenient to dismantle, assemble, replace or repair.

Referring to Figure 11, the net line controlling member (7) is provided with a through hole (71) thereon, and a rotating shaft (72) is disposed in the through hole (71). The rotating shaft (72) is encircled by a plurality of protruding teeth (721), and a hole wall of the through hole (71) is provided with an elastic stop (722) facing toward a space between the protruding teeth (721). The other end of the net line (44) enters the passage (33) of the guide frame (3) after a turn in the second guide block (22), and is tied on a shaft body of the rotating shaft (72). Therefore, when tightness of the net line (44) is improper, the tightness of the net line (44) can be controlled by rotating the rotating shaft (72).

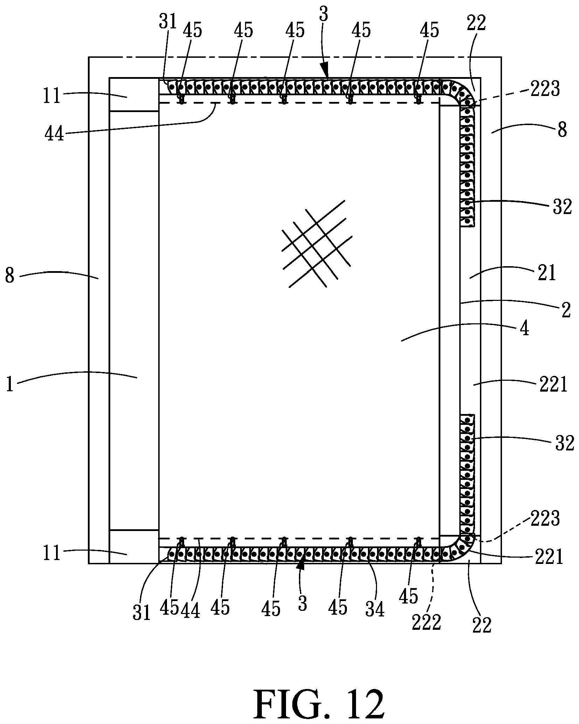

Referring to Figure 12, a second preferred embodiment of the invention differs from the first preferred embodiment in that: both ends of the first frame (1) are each provided with the first guide block (11), and the two first guide blocks (11) are respectively connected to the end portions (31) of the guide frames (3); both ends of the second frame (2) are each provided with the second guide block (22), the end portions (32) of the two guide frames (3) can enter and exit the receiving groove (21) of the second frame (2) at the same time through the second guide blocks (22) at the two ends of the second frame (2); and the two ends of the guide line (64) are respectively disposed on the guide line securing members (6) of the two guide frames (3).

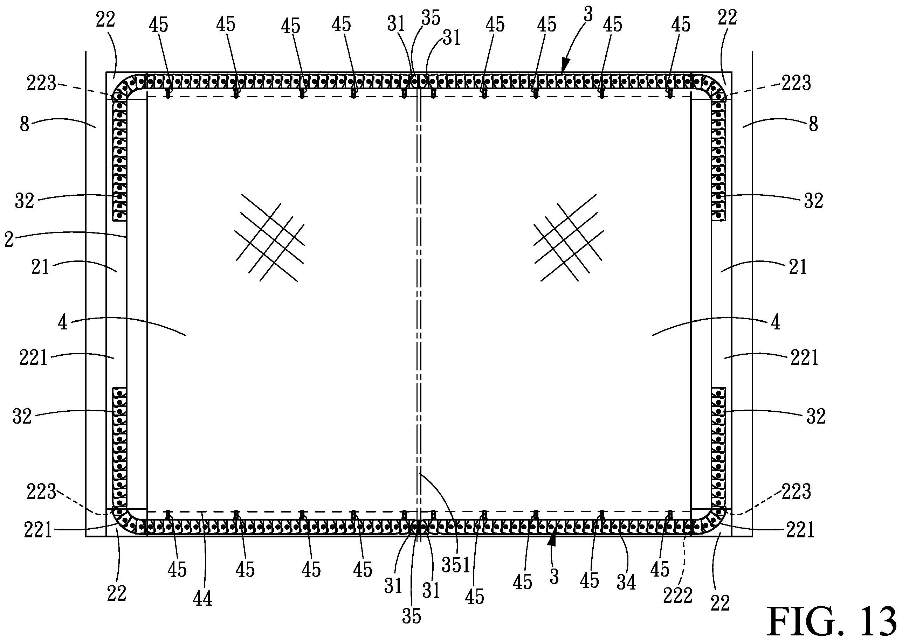

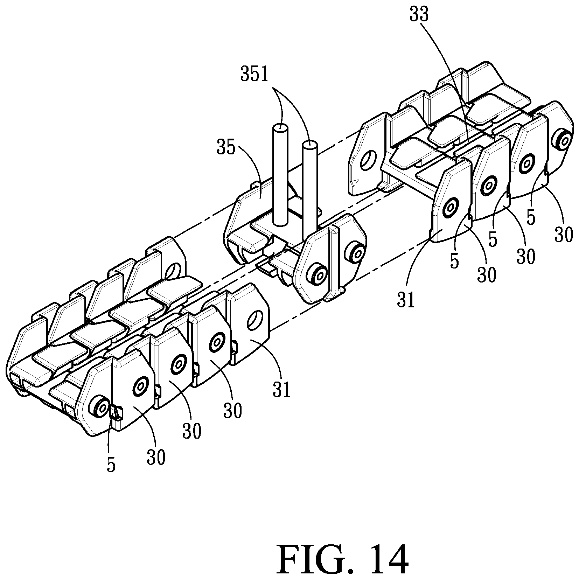

Referring to Figures 13 and 14, a third preferred embodiment of the invention differs from the first and second preferred embodiments in that: this embodiment includes two second frames (2), four guide frames (3) and a screen (4); wherein both ends of the two second frames (2) are each provided with the second guide block (22), and the end portions (32) of the four guide frames (3) enter the receiving grooves (21) of the two second frames (2) respectively through four second guide blocks (22); and an intermediate member (35) is disposed between the end portions (31) of the two guide frames (3) of the same side, at least one support pole (351) is disposed between the two intermediate members (35), and therefore, the aforesaid structural design can not only make this embodiment be applied on a bigger, wider screen (4), but also make the foregoing bigger, wider screen (4) have greater wind resistance by the provision of the support pole (351).

However, the above disclosed drawings and descriptions are merely the preferred embodiments of this invention, and are not to limit the scope of protection of this invention. Other equivalent variations or modification made by those skilled in the art according to the features of this invention shall all be deemed as not departing from the scope of the invention.

## Claims

1. A screen guide frame structure, **characterized by** comprising: a plurality of pivot moving members, said pivot moving members being pivotally connected in series to form a guide frame, each said pivot moving member having an extended piece extended therefrom, a front edge of the extended piece being abutted against another said pivot moving member.

2. The screen guide frame structure as claimed in claim 1, **characterized in that** one end of said guide frame is provided with an intermediate member.

3. The screen guide frame structure as claimed in claim 2, **characterized in that** said intermediate member is provided with at least one support pole thereon.

4. The screen guide frame structure as claimed in claim 1, **characterized in that** each of said pivot moving members is provided with a shifting slot therein, and said shifting slots form a passage in said guide frame.

5. A screen guide frame structure, **characterized by** comprising: a plurality of pivot moving members, said pivot moving members being pivotally connected in series to form a guide frame, and at least one elastic pushing device being each provided between two adjacent ones of said pivot moving members of said guide frame.

6. The screen guide frame structure as claimed in claim 5, **characterized in that** said elastic pushing device at least has an elastic member, and said elastic member includes a root part and a free end, wherein said root part is disposed on one said pivot moving member and said free end is abutted to another said pivot moving member of said guide frame.

7. A screen guide frame structure, **characterized by** comprising: a plurality of pivot moving members, said pivot moving members being pivotally connected in series to form a guide frame, one end of said guide frame being provided with a guide line securing member thereon, said guide line securing member being provided with at least one threaded hole and an engaging protrusion, said engaging protrusion having a pierced hole at a position that corresponds to said threaded hole, a threaded securing component passing through said pierced hole of said engaging protrusion and being threadedly secured in said threaded hole of said guide line securing member.

8. The screen guide frame structure as claimed in claim 7, **characterized in that** said threaded securing component has a guide line tied thereto.

9. A screen device in which the screen guide frame structure as claimed in any one of claims 1 to 8 is applied, **characterized by** comprising: a first frame, a second frame, at least one guide frame and a screen, wherein one end of said first frame is provided with a first guide block, at least one end of said second frame is provided with a second guide block which is communicated to an interior space of said second frame , one end of said guide frame is secured to said first frame and the other end of said guide frame enters and exits said second frame through said second guide block, and two opposite sides of said screen are respectively secured to said first frame and said second frame.

10. A screen device in which the screen guide frame structure as claimed in any one of claims 1 to 8 is applied, **characterized by** comprising: two second frames, a plurality of guide frames and a screen, wherein each of both ends of two said second frames is provided with a second guide block, and one end of each of said guide frames can enter an interior space of said two second frames through a respective one of said four second guide blocks, and two opposite sides of said screen are respectively secured to said two second frames.
